Europäisches Patentamt

(19) European Patent Office

Office européen des brevets

(11) EP 0 890 849 A1

## (12) EUROPEAN PATENT APPLICATION

(43) Date of publication:
13.01.1999 Bulletin 1999/02

(51) Int. Cl.⁶: $G01S\ 1/00$, $G10K\ 11/34$

(21) Application number: 97111743.7

(22) Date of filing: 10.07.1997

(84) Designated Contracting States:
AT BE CH DE DK ES FI FR GB GR IE IT LI LU MC NL PT SE
Designated Extension States:
AL LT LV SI

(71) Applicant: IMRA EUROPE S.A.
06904 Sophia Antipolis Cedex (FR)

(72) Inventors:
• Bonnefoy, Pierre
06800 Cagnes/Mer (FR)
• Harroy, Franck
06600 Antibes (FR)

(74) Representative:
Kügele, Bernhard et al
NOVAPAT INTERNATIONAL SA,
9, Rue du Valais
1202 Genève (CH)

(54) **Acoustic lobe pattern combination method for improving mapping quality**

(57) This invention relates to a method for electronically controlling an ultrasonic transducers phased array to scan a recognition area, the ultrasonic transducers being usable as emitters or receivers.

In particular, this inventive method controls the array so as to successively scan the same observation area by controlling a first configuration of transducers so as to emit a first emission acoustic lobe pattern (9,10,10',11) in order to obtain returned echo signals with a high resolution, and by controlling a second configuration of transducers which is different from the first one, so as to emit a second emission acoustic lobe pattern (14,15,15',16), and by combining the corresponding returned echo signals. The ambiguities which can be present in the returned echo signals from the first emission acoustic lobe pattern (9,10,10',11), are eliminated. The mapping quality can be thus improved.

The present invention is well adapted to robot guidance systems and sonar for vehicles.

EP 0 890 849 A1

## Description

*Technical field of the invention :*

This invention relates to a method for electronically controlling an ultrasonic transducer phased array to scan at least one angular sector of an observation area, the ultrasonic transducers being usable as emitters generating emission acoustic lobes for scanning shots, or receivers generating reception acoustical lobes to receive the returned echo signals.

*Background art and technical problem related to background art :*

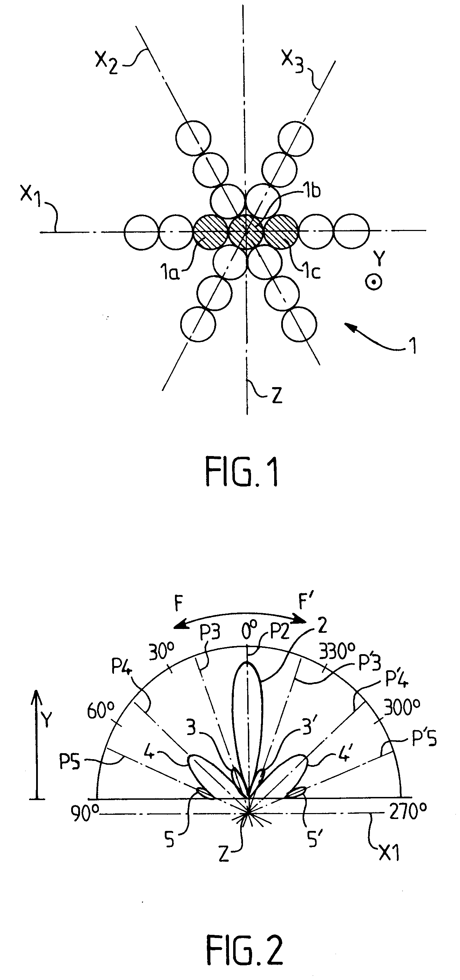

The use of ultrasonic transducer arrays in robotics for scanning an environmental area is well known in the art, and in particular, ultrasonic transducer phased arrays may be used for robot guidance. Fig.1 shows one example of a known ultrasonic transducer array 1 constituting a phased array. The ultrasonic transducers may be arranged in lines X1, X2 and X3 in a six branch-star array 1, and they all are emitting in the same direction Y. In the example of Fig. 1, three transducers which are arranged e.g. in an horizontal line, i.e. transducers 1a, 1b and 1c, forming a one-dimensional array, are used as ultrasonic wave emitters, and some transducers of the periphery can be used as receivers to pick up the returned echo. The ultrasonic transducers are typically circular and spaced by a distance essentially corresponding to the wavelength $\lambda$ of the emitted ultrasonic waves. A $\lambda/2$ spacing is preferably used, as the spacing between the joint ultrasonic transducers, as well as their power, are depending on their size. In such an array, the acoustic field of the transmitter array is given by superposing vibrations from the three emitters electronically excited with different phases, which generates an acoustical lobe pattern which section is represented in Fig. 2, in plane (Y,X1) of Fig. 1, which is representing the spatial acoustic energy distribution of the excited array. Such an array generates three types of ultrasonic beams (hereinafter called《lobes》) : one main lobe 2, two array lobes 4 and 4' due to the spectrum aliasing (hereinafter called《aliasing lobes》), and a plurality of smaller secondary lobes 3, 3', 5 and 5' due to the diffraction at array aperture (hereinafter called《side lobes》). In Fig. 2, the main lobe 2 defines the shooting plane P2, the aliasing lobes 4 and 4' define the shooting planes P4 and P'4, and the side lobes 3, 3', 5 and 5' define the shooting planes P3, P'3, P5 and P'5. The shooting planes of the aliasing lobes and side lobes are all symmetrical about the shooting plane P2, and they cut each other along axis Z.

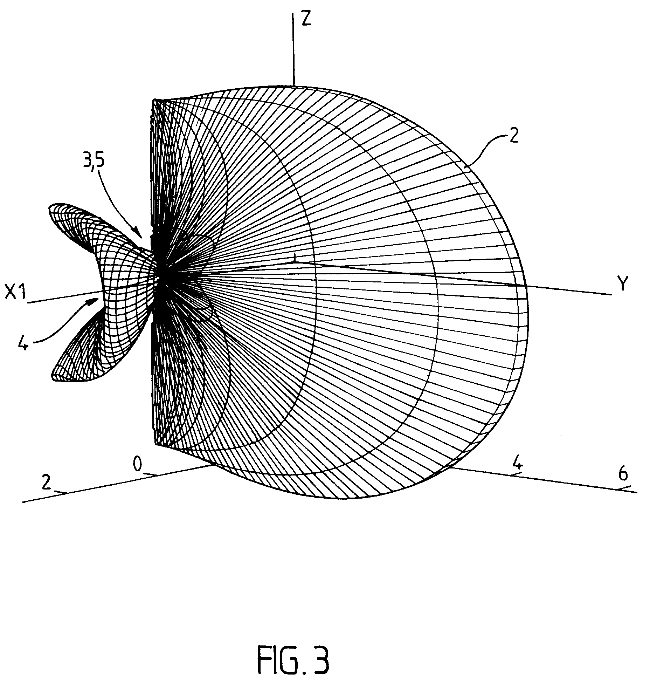

Fig. 2 is a two dimension representation in plane (X1,Y), of the acoustical lobe pattern generated by the linear transducer array (1a,1b,1c) of Fig. 1. In a three dimension (3D) representation, such a linear ultrasonic transducer array generates a disc-shaped lobe 2, two aliasing lobes 4 and 4', and side lobes 3, 3', 5 and 5', as shown in Fig.3. Fig.3 shows the 3D representation of the acoustic lobe pattern emitted by the aligned seven transducers of line X1 of transducer array 1. Aliasing lobe 4' and side lobes 3',5' are hidden by main lobe 2.

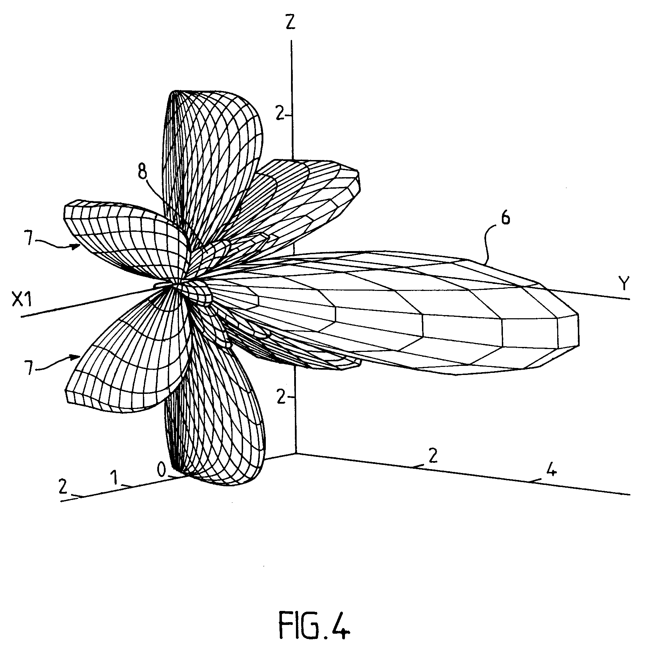

Fig.4 shows a 3D representation of an acoustic lobe pattern generated by the 19 transducers of the six branch-star array of Fig.1 used as emitters. Contrary to the previous acoustic lobe pattern generated by a linear emitter array, the aliasing lobes 7 and the side lobes 8 of the acoustical lobe pattern generated by the six branch-star emitter array are not in the horizontal scanning plane (X1,Y) of main lobe 6.

Electronic scanning can be achieved by properly feeding the excitation signals to the individual elements of the phased array so as to unity the phases of the acoustic pulses in successive desired directions (i.e. different angles on plane (X1,Y). Simultaneously, the spatial energy distribution of the lobes varies, i.e. the aliasing lobe which is situated on the one side of the main lobe to which the main lobe turns due to the scanning (arrows F or F') decreases, and the one situated on the opposite side increases. Main lobe becomes an array lobe, and the array lobe of the opposite side becomes main lobe. By successive shots, in which successive phase variations between the excitation signals supplied to the emitters are introduced, a scanning of the recognition area from 0° to practically ± 90° can be achieved. By identifying the presence of one or more echoes, during the measuring of the returned echo of the main lobe, the location, configuration and distribution of objects in the scanned area is recognized. Such a one-dimensional ultrasonic transducer phased array is described in Japanese patent JP 052357. An example of a two-dimensional transducer array together with its electronic scanning method is described in 《Ultrasonic imaging system for robots using an electronic scanning method 》S. Kuroda et al, Robotica (1984), volume 2, pages 47 to 53.

However, in this type of scanning method, the aliasing lobes generate returned echo signals which can create ambiguities in the identification of the precise location of a detected object. The ambiguities may be limited by an horizontal scanning with a cylindrical beam, as array lobes are not in the horizontal plane, but the resolution is consequently lower. Further, the plurality of side lobes generate interfering secondary small returned echo signals.

Therefore, there is an important need to develop a new type of ultrasonic scanning method with a high resolution, good reliability and shorter processing time, which can be easily implemented by simple ultrasonic transducer phased arrays and electronic control circuits with low cost.

*Summary of the invention :*

The purpose of this invention is to overcome the above deficiency and to improve mapping quality by using a first embodiment of the method of the type described above which is characterized by :

. controlling a first configuration of transducers as emitters so as to generate a first emission acoustic lobe pattern, and controlling at least one transducer as receiver for producing corresponding first returned echo signals for memorizing said first returned echo signals,
. controlling a second configuration of transducers as emitters so as to generate a second emission acoustic lobe pattern different from the first emission acoustic lobe pattern, and controlling at least one transducer as receiver for producing corresponding second returned echo signals for memorizing said second returned echo signals,
. mathematically combining point by point said memorized first returned echo signals, with said memorized second returned echo signals, so as to unambiguously identify those of the returned echo signals which are present on the corresponding angular points of both returned echo signals.

The same goal can be reached by implementing another embodiment of the method according to the invention, which is characterized by :

. controlling a first configuration of transducers as emitters so as to generate a first emission acoustic lobe pattern,
. controlling a second configuration of transducers as receivers which is different from said first configuration of transducers as emitters, for receiving the returned echo signals from said first emission acoustic lobe pattern, and
. applying a beam forming on the memorized returned echo signals from said first emission acoustic lobe pattern received by said second configuration of transducers controlled as receivers, so as to unambiguously identify the returned echo signals.

The same goal can be reached by implementing a further method according to the invention, which is characterized by :

. controlling at least one transducer as emitter so as to emit at least one shot,
. controlling a first configuration of transducers as receivers, for receiving the returned echo signals from first shot of said at least one shot, and applying a beam forming on said returned echo signals,
. controlling a second configuration of transducers as receivers which is different from said first configuration of transducers, for receiving the returned echo signals from said at least one shot, and applying a beam forming on said returned echo signals, then
. mathematically combining point by point both beam forming results, so as to unambiguously identify the returned echo signals (9',16).

Advantageously, this method is automatically implemented on one or several shots if at least one echo signal either of said first returned echo signals from said first emission acoustic lobe pattern, or of said beam forming applied on said first configuration, having a value higher than a predetermined threshold value, is detected in the scanned angular sector.

Said first and second configurations of transducers may be a one-dimensional configuration and a two dimensional configuration, respectively, or a two-dimensional configuration and a one-dimensional configuration, respectively.

Advantageously, the one-dimensional configuration is a line of ultrasonic transducers, and the two-dimensional configuration is a star configuration or a combination of at least two lines of ultrasonic transducers arranged in staggered rows (quincunx). The star configuration may be a six branch star.

Preferably, the configurations of transducers comprise an odd number of ultrasonic transducers used as emitters, and the transducers used as receivers are the ones arranged at each end of the lines or branches.

Moreover, the one-dimensional configuration and/or the two-dimensional configuration of ultrasonic transducers may be arranged on a curved surface.

The method of the present invention can be easily implemented by controlling transducers as emitter or receiver, in a line configuration, and/or by controlling the transducers as emitters or receivers, in a star configuration.

Additional objects and features of the invention will appear from the following description in which the preferred embodiments are set forth in detail in connection with the accompanying drawings.

. figure 1 (already described) shows a known ultrasonic transducer array used for scanning an observation area,
. figure 2 (already described) shows the ultrasonic beam's spatial energy distribution generated by a linear array of three transducers used as emitters in figure 1,

. figure 3 (already described) shows the 3D acoustical lobe pattern generated by seven aligned transducers of the transducer array of figure 1, used as emitters,

. figure 4 (already described) shows the 3D acoustical lobe pattern generated by nineteen transducers of the transducer array of figure 1 used as emitters in a six branch-star configuration,

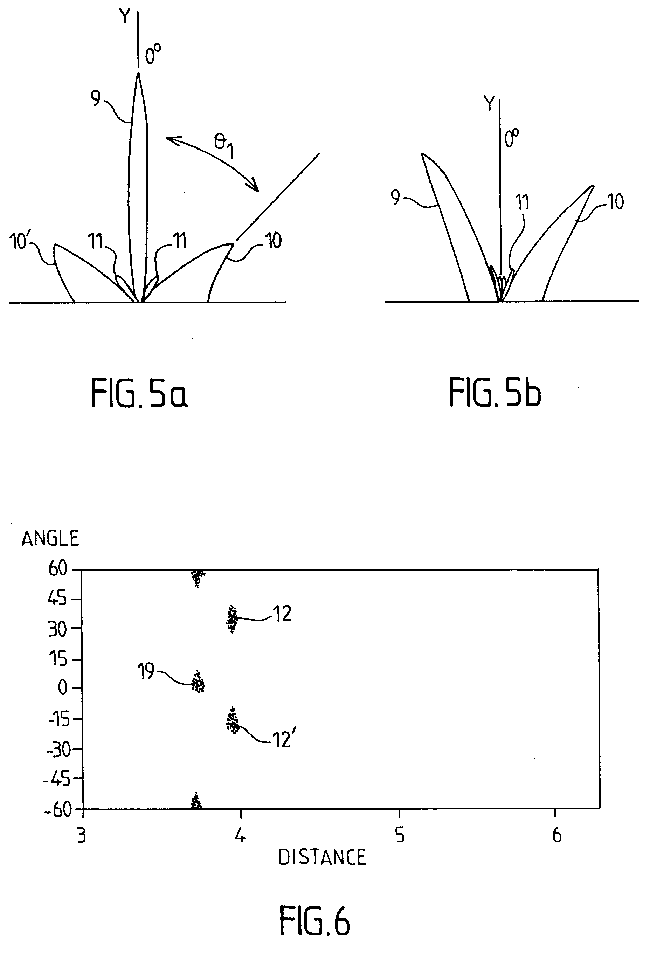

. figure 5a and 5b show a first lobe pattern for scanning, which is generated by the seven aligned transducers of the transducers array of figure 1, and which is used in a first embodiment of the method according to the present invention,

. figure 6 shows the image of an example of an observation area, from the returned echo signals obtained with the scanning by the lobe pattern of figures 5a and 5b,

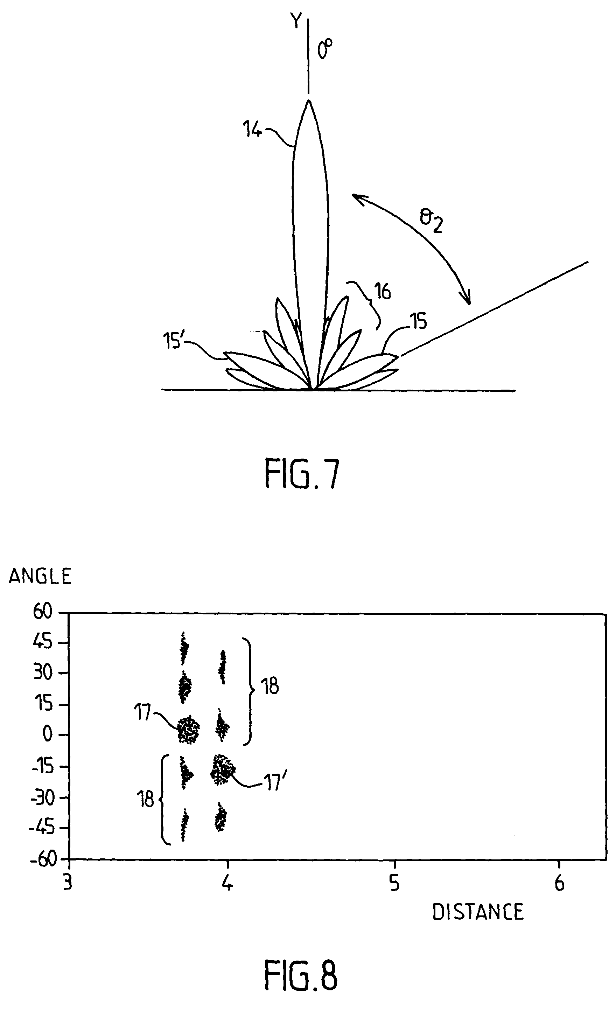

. figure 7 shows a second lobe pattern for scanning which is generated by nineteen transducers of the six branch-star array of figure 1, and which are used in the first embodiment of the method according to the present invention,

. figure 8 shows the image of the same observation area as the one in the example of figure 6, obtained with the scanning by the lobe pattern of figure 7,

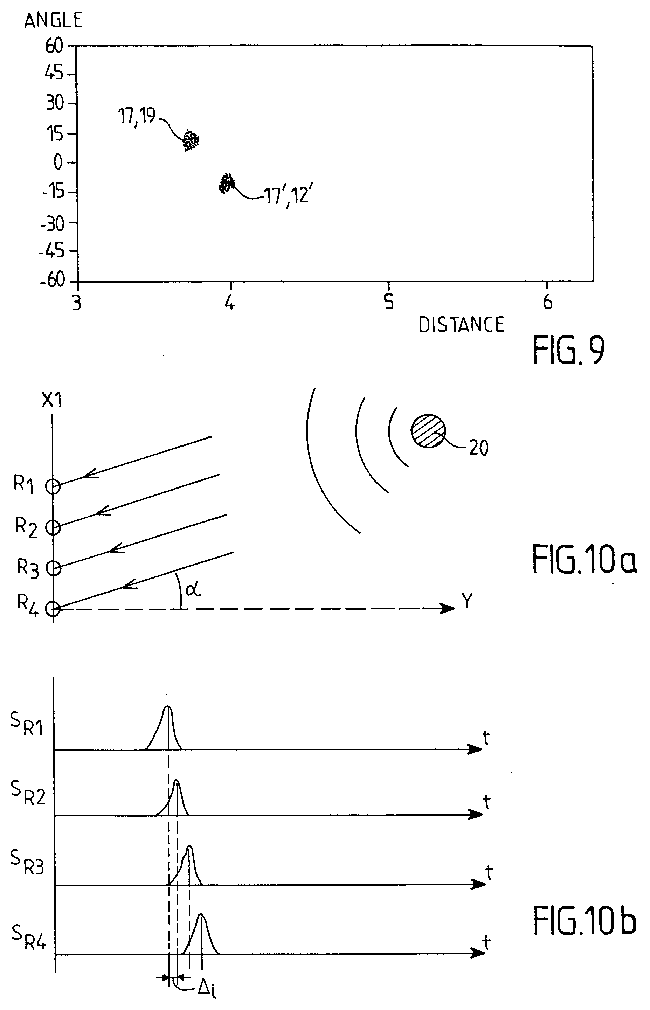

. figure 9 shows the improved quality image obtained after mathematical superposition of the two images of figures 6 and 8, according to the first embodiment of the method of the present invention, and

. figures 10a and 10b show the principle of the beam forming method which is used in two other embodiments of the present invention.

*Description of the embodiments of the present invention :*

A first embodiment of the method according to the present invention will now be described.

A first characteristic of the present invention is to generate a first acoustic lobe pattern, i.e. an acoustic energy distribution having a high resolution, from a known phased array, as shown in Fig. 5a, by electronically exciting, for instance, a phased array of the type of figure 1. In this example, seven ultrasonic transducers are used as ultrasonic emitters, in a line configuration, as the ones aligned on axis X1 in Fig.1, and the reception of corresponding returned echo signals can be achieved by receiver 1b of Fig. 1. By electronically controlling such emitters in a known manner, a main lobe 9 having the shape of a flat disc with a width of about 8°, can be generated together with two aliasing lobes 10 and 10' which are spaced an angle of $\theta_1=60°$ from main lobe 9, and small side lobes 11. The number of aliasing lobes depends on the spacing between emitters, and the angular distance between the lobes depends on the emitter size and the frequency of the excitation signals supplied to the transducers. This type of lobe pattern insures a good resolution in the horizontal plane (narrow main lobe) of the returned echo signal image. The resolution can be improved by using an array with an increased number of aligned emitters.

However, the two aliasing lobes 10 and 10' generate ambiguities in the returned echo signal image as shown in Fig. 6. In this figure, the horizontal axis represents the distance between an object of the observation area and the center of the phased array, and the vertical axis represents the shot angles (from 60° to -60°). The spots 12, 12' and 19 represent the intensity of the returned echo signals corresponding to the location of the detected object. In this example, one ambiguity results in the two symmetrical spots 12 and 12' which can either correspond to a single object at 30° or -30°, recognized once by the main lobe and once by one of the aliasing lobes, or correspond to two objects of 60° distance from each other.

Indeed, during the scanning of the observation area, the main lobe 9 and the increased aliasing lobe 10 (or 10') are focusing the main acoustic energy and are separated with a constant angle of 60°, as shown in Fig.5b. Consequently, two returned echo signals can be detected symmetrically with respect to reference axis of 0°.

A second characteristic of the present invention is to generate another acoustic lobe pattern with a different and complementary lobe configuration from the same ultrasonic transducer phased array, and to scan the same recognition area from the same location. Such a second pattern may advantageously be obtained by electrically controlling the 19 transducers of the same previous transducer array in a star configuration of 19 emitters, in order to obtain an acoustic lobe pattern of the type of Fig. 7 in which aliasing and side lobes are not in the scanning horizontal plane as shown in figure 4. The reception of the returned echo signals can be achieved by receiver 1b of Fig. 1. A powerful round lobe 14 can be generated with two aliasing lobes 15 and 15', and a plurality of side lobes 16. Such a lobe configuration is called 〈〈cylindrical pattern〉〉. As the width of the main lobe 14 is medium (about 12°) and the side lobes 16 are quite important, contrary to the previous step, the scanning resolution is low and there are a plurality of high interfering returned echo signals due to the side lobes.

However, the aliasing lobes being symmetrically spaced with an angle of $\theta_2=120°$ from the main lobe 14, there is no ambiguity at 60° as in the use of the previous scanning pattern. Fig. 8 shows the returned echo signal image of the scanning using this second scanning pattern, with two large main spots 17 and 17' (low resolution) corresponding to the actual presence of two detected objects in the observation area, and some interfering secondary spots 18 due to the side lobes 16.

The main characteristic of the present invention, resides in the combination of these two scanning steps in order to keep the good resolution of the first scanning step but presence of ambiguous signals from the aliasing lobes, together with a second step which may have less resolution but wherein ambiguities are located at different angles, so it is possible to eliminate the effects of ambiguities of both steps. This can be achieved by memorizing the results of the first scanning step, scanning the same observation area with the second scanning step, and combining point by point the two returned echo results in a multiplication step. This can be easily achieved with a control software by using a known phased array controlling circuit as the one used for acoustic emission and returned echo reception purposes, of the above mentioned prior art devices, which further includes a means for carrying out the mathematical multiplication of the received results of each one of the two described scanning steps.

In the present embodiment, the result of the combination of both scanning shots is shown in Fig.9. In this figure, the ambiguous spot 12 has disappeared, only spots 12', 17' and 17 corresponding to the actual object locations in the observation area are left.

Another advantage of such a pattern combination is that interfering secondary spots 18 due to the returned echo signals of the side lobes 16 during the second step, are weighted by the low echo signals of the first step wherein the side lobes 11 are small.

The second scanning shot can be sequentially implemented in angular sectors, and activated only when a returned echo is detected by the first high resolution scanning shot in the particular surface where echoes are in the angular sector, in order to reduce the time-consumption. Preferably, the second step is activated only when the value of the detected echo is higher than a predetermined value.

Advantageously, these two scans are made by the same ultrasonic transducer phased array. However, two arrays can be used, each generating and/or receiving a type of lobe pattern.

In the described first embodiment, the two different patterns are generated during emission, by applying excitation signals to different configurations of emitters, and the memorized returned echo signals are simply electronically combined. Thus, the emission pattern of Fig. 5a is typically obtained by exciting a linear array of emitters, such as illustrated in Fig. 1 whereas the emission pattern of Fig.7 is obtained by exciting the transducers in a six branch-star configuration.

However, another embodiment of the present invention consists in memorizing the echo received on each one of all the transducers of the phased array controlled as receivers (19 receivers in example of Fig. 1), from one shot of the first acoustic lobe pattern generated by a first ultrasonic transducer array, as for instance the aligned transducers 1a, 1b and 1c of Fig. 1 controlled as emitters. Then, by applying a beam forming method to the echo signal of each receiver of another transducer array having a different configuration, as for instance the star configuration array of Fig. 1, the ambiguities due to the first acoustic lobe pattern are eliminated.

The beam forming method is known in the art, the principle being that the same phase correlation made for emitting purposes is made for echo reception. As shown in Fig. 10a, from one shot, the echo reception signal of a target 20 arrives at different time in the various transducers used as receivers, e.g. four aligned receivers R1, R2, R3 and R4. Fig. 10b shows the value of the dephased return echo signal amplitudes SR1, SR2, SR3 and SR4 for each receiver, against the time. The beam forming method consists in making, for each angle, a dephased summation of the memorized return echo signal, so as to obtain the value of the return echo for each angle. For each shot, angular openings $\theta_i$ which are corresponding each to a time delay $\Delta i$, are electronically created for different virtual angles, creating a reception directivity, and, in the particular case of one-dimensional configuration of $k$ receivers, the scanning is achieved by calculation for each angle $\theta_i$:

$$A(\theta_i) = S_{R1}(t) + S_{R2}(t+\Delta_i) + S_{R3}(t+2.\Delta_i) + S_{R4}(t+3.\Delta_i) + ... + S_{Rk}(t+(k-1).\Delta_i),$$

and by checking the maximum of the amplitude $A(\theta_i)$ for different angle $\theta_i$, the target angle $\alpha$ is found. Each target angle $\alpha$ corresponds to one time delay. The addition of these individual time delays produces an unambiguous indication of the absolute angle under which the reflecting obstacle is seen from the receiver. For an easy understanding, this example concerns aligned receivers, but the beam forming method may be applied to any 2D receiver array.

Another embodiment of the method according to the present invention, consists in a first shot from at least one transducer controlled as emitter, and memorizing the returned echo signals received on a first configuration of transducer array controlled as receivers, as, for instance on the aligned receiver array 1a, 1b and 1c of Fig. 1. Then, a first beam forming step is applied on the memorized returned echo signals of this first receiver array configuration. As each receiver array has a reception lobe pattern attached to its configuration (in our example : the line configuration), some ambiguities can be present as well as in the emission mode of the corresponding line configuration emitter array.

In order to eliminate these ambiguities, a second step equivalent to the previous one is achieved, but using a receiver array with a different configuration as, for instance, the star configuration array of Fig. 1. Then a second beam forming step is applied to the memorized returned echo signals received by each receiver of this second receiver array, and the result is combined with the result of the first beam forming step in order to eliminate the ambiguities. These two steps can be applied for each shooting angle.

A unique shot from at least one emitter of the transducer array can be received by all the receivers of the star configuration array, and memorized. Then a first beam forming step is applied on the memorized echo signals received by each receiver of a first receiver configuration (e.g. line configuration receiver array), and a second step beam forming is applied on the memorized echo signals of a second receiver configuration (e.g. star configuration receiver array).

Thus, the inventive method can be implemented in three different ways :

. in subsequent emission of two different patterns followed by a combination step of both receptions,
. in a single emission in one pattern from a first transducer array and a beam forming on a second transducer array, and
. in a single shot and single reception, followed by a combination of both beam forming, or two shots and two receptions, followed by a combination of both beam forming.

The present invention can be implemented by using more than two complementary lobe patterns, and the particular configurations described above are taken as examples, any configurations of transducers different from each other can be used. In particular, in the above description of the embodiments of the present invention, the given examples of one-dimensional and a two-dimensional configurations are line and star configurations, respectively. However, the two-dimensional configuration may be a combination of, at least, two lines of ultrasonic transducers which may advantageously be arranged in staggered rows (quincunx). Preferably, the configurations of transducers may comprise an odd number of ultrasonic transducers used as emitters, and the transducers used as receivers may be the ones arranged at each end of said lines or branches. Further, both one-dimensional and two-dimensional configurations of ultrasonic transducers may be arranged on a curve surface.

*Industrial application :*

The invention can be implemented in a solid medium (e.g. for a non-destruction testing), in a liquid medium as, for instance water, and in a gaseous medium as, for instance, air. In particular, the inventive method can perform indoor robot navigation in autonomous way, with improved results. The accuracy in distance can be about 1 cm, the accuracy in angle 2°, the operation range from 0,5 to 10 m, response time from 50 to 500 ms, and electronic scanning from ± 90°.

The present invention can be implemented with a known digital signal processor (DSP) as the Texas Instruments TMS320C31 connected to an IBM-compatible personal computer. The signal processing software can be written in a combination of assembly language and 《《C》》. Communication with a robot can be provided via a standard RS232 serial line.

Since few ultrasonic transducers are necessary, and since they are easily available in the market, the whole improved system has a compact size and a low cost. Further, the same ultrasonic array can be used for other purposes by simply modifying the control signals through software. This system is not sensitive to the light and can operate at night.

The present invention has a large range of applications. For instance, it can be used for vehicles (back sonar system, automatic car parking, collision protection), in industry (automatic parts distribution, automatic packaging, remote control of objects on assembly lines, cleaning robots, etc.), at home (automatic floor cleaning) and for public health (sonar for blind persons, and movement detection for elderly person).

**Claims**

1. Method for electronically controlling an ultrasonic transducer phased array to scan at least one sector of an observation area, the ultrasonic transducers being usable as emitters generating emission acoustic lobes for scanning shots, or receivers for receiving the returned echo signals,
   **characterized by :**

   . controlling a first configuration of transducers as emitters so as to generate a first emission acoustic lobe pattern (9,10,10',11), and controlling at least one transducer as receiver for producing corresponding first returned echo signals for memorizing said first returned echo signals,
   . controlling a second configuration of transducers as emitters so as to generate a second emission acoustic lobe pattern (14,15,15',16) different from the first emission acoustic lobe pattern, and controlling at least one transducer as receiver for producing corresponding second returned echo signals (17,17',18) for memorizing said second returned echo signals,
   . mathematically combining point by point said memorized first returned echo signals (12,12',19), with said memorized second returned echo signals (17,17',18), so as to unambiguously identify those of the returned echo signals (12', 19; 17,17') which are present on the corresponding angular points of both returned echo signals (12,12',19; 17,17').

2. Method for electronically controlling an ultrasonic transducer phased array to scan at least one sector of an observation area, the ultrasonic transducers being usable as emitters generating emission acoustic lobes for scanning shots, or receivers for receiving the returned echo signals, **characterized by :**

  . controlling a first configuration of transducers as emitters so as to generate a first emission acoustic lobe pattern (9,10,10',11),
  . controlling a second configuration of transducers as receivers which is different from said first configuration of transducers as emitters, for receiving the returned echo signals from said first emission acoustic lobe pattern, and
  . applying a beam forming on the memorized returned echo signals (12,12',19) from said first emission acoustic lobe pattern (9,10,10',11) received by said second configuration of transducers controlled as receivers, so as to unambiguously identify the returned echo signals (12',19).

3. Method for electronically controlling an ultrasonic transducer phased array to scan at least one sector of an observation area, the ultrasonic transducers being usable as emitters generating emission acoustic lobes for scanning shots, or receivers for receiving the returned echo signals,
  **characterized by :**

  . controlling at least one transducer as emitter so as to emit at least one shot,
  . controlling a first configuration of transducers as receivers, for receiving the returned echo signals from first shot of said at least one shot, and applying a beam forming on said returned echo signals,
  . controlling a second configuration of transducers as receivers which is different from said first configuration of transducers, for receiving the returned echo signals from said at least one shot, and applying a beam forming on said returned echo signals, then
  . mathematically combining point by point both beam forming results, so as to unambiguously identify the returned echo signals (12',19).

4. Method according to one of the previous claims, **characterized in that** said method is automatically implemented on one or several shots if at least one echo signal either of said first returned echo signals from said first emission acoustic lobe pattern, or of said beam forming applied on said first configuration, having a value higher than a predetermined threshold value, is detected in the scanned angular sector.

5. Method according to claim 1, 2, 3 or 4, **characterized in that** said first and second configuration of transducers are a one-dimensional configuration (1a,1b,1c) and a two-dimensional configuration (1), respectively.

6. Method according to claim 1, 2, 3 or 4, **characterized in that** said first and second configuration of transducers are a two-dimensional configuration (1) and a one-dimensional configuration (1a,1b,1c), respectively.

7. Method according to claim 5 or 6, **characterized in that** the one-dimensional configuration is a line (X1) of ultrasonic transducers.

8. Method according to claim 5 or 6, **characterized in that** the two-dimensional configuration is a star configuration (X1,X2,X3) of ultrasonic transducers.

9. Method according to claim 8, **characterized in that** the star configuration is a six branch star.

10. Method according to claim 5 or 6, **characterized in that** the two-dimensional configuration is a combination of at least two lines of ultrasonic transducers arranged in staggered rows.

11. Method according to claims 1 to 10, **characterized in that** the configurations of transducers comprise an odd number of ultrasonic transducers used as emitters.

12. Method according to claim 7 to 11, **characterized in that** the transducers used as receivers are the ones arranged at each end of said lines or branches.

13. Method according to one of claims 5 to 12, **characterized in that** the one-dimensional configuration and/or the two-dimensional configuration of ultrasonic transducers are arranged on a curved surface.

FIG.1

FIG.2

FIG. 3

FIG.4

FIG.5a          FIG.5b

FIG.6

11

FIG.7

FIG.8

ANGLE

FIG. 9

X1

FIG. 10a

FIG. 10 b

EP 0 890 849 A1

**European Patent Office**

## EUROPEAN SEARCH REPORT

Application Number

EP 97 11 1743

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 958 330 A (HIGGINS FRANCIS J)<br>* abstract *<br>* figures 2,3 *<br>* claims 1-5 *<br>--- | 1 | G01S1/00<br>G10K11/34 |
| X | US 4 510 586 A (GRALL GEORGES ET AL)<br>* abstract *<br>* figures 1-4,6,8 *<br>* column 2, line 7 - line 31 *<br>--- | 2 | |
| X | US 4 129 874 A (BENTLEY W ET AL)<br>* abstract *<br>* figures 2,5,6 *<br>--- | 3 | |
| A | US 5 537 367 A (LOCKWOOD GEOFFREY R ET AL)<br>* the whole document *<br>--- | 1-3 | |
| X | GB 2 234 815 A (HONEYWELL ELAC NAUTIK GES MIT)<br>* abstract *<br>* figures 1-4 *<br>* page 4 - page 5 *<br>* page 8 *<br>--- | 2,5-7,13 | **TECHNICAL FIELDS SEARCHED** (Int.Cl.6)<br><br>G10K<br>G01S |
| X | US 4 458 533 A (BORBURGH JACQUES)<br>* abstract *<br>* figures 3,4 *<br>* column 2, line 15 - line 22 *<br>* column 7, line 5 - line 55 *<br>--- | 4 | |
| A | EP 0 733 408 A (IMRA EUROP SA)<br>* the whole document *<br>----- | 8-12 | |

The present search report has been drawn up for all claims

| Place of search | Date of completion of the search | Examiner |
|---|---|---|
| THE HAGUE | 18 December 1997 | de Heering, Ph. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

14